# DEMANDE DE BREVET EUROPEEN

(11) **EP 1 359 723 A1**
(43) Date de publication de la demande: **05.11.2003**
(21) Numéro de dépôt: 03006038.8
(22) Date de dépôt: 19.03.2003
(51) Int. Cl.: H04L 29/06, G06F 17/30

(54) **Systéme de communication d informations sélectionnées en fonction d'un profil d'un utilisateur**

(30) Priorité: 12.04.2002 FR 0204643
(71) Demandeur: FRANCE TELECOM, 75015 Paris (FR)
(72) Inventeur: Mourrain, Christine, 38000 Grenoble (FR); Le Meur, Valérie, 38160 Saint Marcellin (FR); Berge, Jean-Michel, 38330 Saint Nazaire les Eymes (FR)
(74) Mandataire: Jeune, Pascale

(57) **Abrégé**

La présente invention se rapporte à un système (1) de communication d'informations sélectionnées en fonction d'un profil d'un utilisateur. Pour chaque utilisateur, le système comprend au moins un terminal (2) portable de télécommunication comprenant des moyens de connexion à un serveur (6), des deuxièmes moyens de téléchargement pour télécharger depuis une zone (7) de stockage via une première liaison (4) et un premier moyen (3) de téléchargement des informations sélectionnées pour un profil déterminé de l'utilisateur, et comprenant des moyens de mémorisation pour mémoriser les informations téléchargées, et des troisièmes moyens de téléchargement pour télécharger depuis la zone (7) de stockage, dans le terminal (2) portable de l'utilisateur, les informations sélectionnées mises à jour pour un profil déterminé de l'utilisateur et pour transférer des informations entre le terminal (2) portable et le serveur (6), via une seconde liaison (8).

## Description

L'invention se rapporte au domaine des télécommunications et plus particulièrement au domaine des réseaux de télécommunication, notamment de l'Internet, et des systèmes associés ainsi qu'aux services disponibles sur de tels réseaux.

L'invention trouve une application très avantageuse en ce qu'elle permet, par l'extraction d'informations sélectionnées en fonction d'un profil, de rendre disponible pour présentation sur un terminal portable d'un utilisateur des données fiables sur des sujets définis par l'utilisateur dans ce profil.

Actuellement, une personne qui se déplace dans le cadre d'un voyage transporte habituellement avec elle des guides fournissant des informations sur les lieux visités. Ces guides ont pour principaux inconvénients d'être encombrants et de contenir des informations dont la fiabilité dépend de la date d'édition du guide qui les contient. Ces informations peuvent aussi bien se rapporter à des heures d'ouverture de bâtiment, qu'à un plan de ville, voire à des contraintes techniques sur l'utilisation d'un téléphone mobile et à la définition des services disponibles à partir du réseau de télécommunication local. En outre ces informations sont limitées par le volume et le poids que la personne peut transporter.

Pour remédier au problème de fiabilité, la personne peut emporter un ordinateur portable pour accéder successivement aux sites accessibles à partir du réseau de télécommunication local. Mais cette solution nécessite de pouvoir connecter l'ordinateur personnel à ce réseau local et nécessite surtout un moyen d'accès au réseau Internet. Cette solution est contraignante car elle nécessite d'avoir accès à une prise branchée au réseau de télécommunication local au moment où doit s'effectuer l'interrogation et de disposer de l'autorisation d'accès au réseau. En outre, son utilisation peut engendrer des coûts de connexion élevés peu maîtrisables par l'utilisateur.

Un des objectifs de l'invention est de proposer un système de communication d'informations pour des utilisateurs, les informations étant sélectionnées pour chaque utilisateur en fonction d'un profil de l'utilisateur, qui ne présente pas les inconvénients précités. Le système comprend :
- un réseau de télécommunication,
- au moins un serveur accessible via le réseau de télécommunication comprenant un moteur de recherche pour sélectionner, pour un utilisateur déterminé, des informations accessibles à partir du réseau en fonction d'un profil pris parmi une liste de profils de l'utilisateur, le serveur activant ce moteur de recherche au moins à chaque modification d'un profil de l'utilisateur pour mettre à jour les informations sélectionnées,
- une zone de stockage en liaison avec le serveur pour mémoriser la liste de profils de chaque utilisateur et les informations sélectionnées pour chaque profil,
- un moyen de formatage pour formater les informations sélectionnées sous une forme déterminée en liaison avec un profil,
- au moins une première liaison de type haut débit entre un premier moyen de téléchargement et le réseau de télécommunication,
- pour un utilisateur déterminé, au moins un terminal portable de télécommunication comprenant des moyens de connexion au serveur, des deuxièmes moyens de téléchargement pour télécharger depuis la zone de stockage via la première liaison et le premier moyen de téléchargement les informations sélectionnées pour un profil déterminé de l'utilisateur, et comprenant des moyens de mémorisation pour mémoriser les informations téléchargées, et des troisièmes moyens de téléchargement pour télécharger depuis la zone de stockage, dans le terminal portable de l'utilisateur, les informations sélectionnées mises à jour pour un profil déterminé de l'utilisateur et pour transférer des informations entre le terminal portable et le serveur, via une seconde liaison.

L'invention a en outre pour objet un service de communication d'informations sélectionnées en fonction d'un profil d'un utilisateur, accessible par l'utilisateur à partir d'un terminal portable de télécommunication équipé de moyens de connexion à un serveur par l'intermédiaire d'un réseau de communication.

Lors d'une connexion initiale avec le serveur, le service comprend des étapes qui consistent :
- à saisir par l'utilisateur à partir d'un moyen de télécommunication relié au réseau au moins un profil,
- à mémoriser dans une zone de stockage en liaison avec le serveur chaque profil saisi par l'utilisateur et à classer les différents profils dans une liste de profils de l'utilisateur,
- à déclencher par le serveur l'activation d'un moteur de recherche, au moins à chaque saisie et à chaque modification d'un profil de l'utilisateur, pour sélectionner des informations accessibles à partir du réseau de télécommunication en fonction de chaque profil et pour mettre à jour les informations sélectionnées,
- à mémoriser les informations sélectionnées dans la zone de stockage, en relation avec chaque profil,
- à formater les informations sélectionnées sous une forme déterminée compatible du terminal portable.

Lors de la même connexion ou d'une connexion ultérieure avec le serveur, via une première liaison de type haut débit entre le serveur et un premier moyen de téléchargement relié au terminal portable, le service comprend une étape qui consiste :
- à télécharger depuis la zone de stockage, dans le terminal portable de l'utilisateur, les informations sélectionnées pour un profil déterminé de l'utilisateur,

Lors d'une connexion suivante avec le serveur via une seconde liaison, le service comprend des étapes qui consistent :
- à mettre à jour par l'utilisateur au moins un de ses profils mémorisés dans la zone de stockage,
- à télécharger depuis la zone de stockage, dans le terminal portable de l'utilisateur, les informations sélectionnées mises à jour pour un profil déterminé de l'utilisateur, depuis la zone de stockage et via la seconde liaison.

Ainsi, lors d'une phase de préparation à un voyage donné, l'utilisateur détermine son profil lié à ce voyage en se connectant au serveur, de préférence à partir d'un micro-ordinateur. Le serveur sélectionne au moyen d'un moteur de recherche des informations qui sont accessibles sur le réseau et qui sont en relation avec ce profil. Ces informations sont mémorisées dans une mémoire du réseau. Toute modification ultérieure du profil active le moteur de recherche pour une mise à jour des informations sélectionnées. Les informations sélectionnées et mémorisées sont formatées sous une forme compatible avec l'écran du terminal portable de l'utilisateur et téléchargeables à tout instant. Avant son départ en voyage, l'utilisateur télécharge dans son terminal portable les informations sélectionnées, après avoir établit une connexion entre le terminal portable et le serveur au moyen d'une liaison haut débit entre le serveur et un point de téléchargement. Le point de téléchargement, typiquement un micro-ordinateur, est relié au terminal portable par une liaison courte de type filaire ou de type radio.

Lors de son voyage, l'utilisateur peut établir à tout moment une connexion entre son terminal portable et le serveur, typiquement via une liaison bas débit. Une telle liaison peut être établie avec un réseau téléphonique local. Lors de cette connexion, l'utilisateur active le téléchargement d'informations sélectionnées et mémorisées dans une mémoire du réseau, pour une mise à jour des informations mémorisées dans son terminal portable. Un tel téléchargement peut tout aussi bien être effectué via une liaison par message ou via une liaison haut débit du type GPRS ou UMTS si une telle liaison est accessible par l'utilisateur au moment donné. Dans le cas d'une mise à jour par message, par exemple du type SMS selon les termes anglo-saxons Short Message System ou du type MMS selon les termes anglo-saxons Multimedia Messaging Service, la lecture du message s'effectue de manière asynchrone par rapport à la réception.

Ainsi le téléchargement en phase voyage permet de répercuter rapidement, dans le terminal portable de l'utilisateur, toute évolution du contenu des informations sélectionnées par le moteur de recherche du serveur.

Ainsi, lors de son séjour, l'utilisateur peut adapter à tout moment le contenu des informations mémorisées dans son portable en modifiant son profil, puis en effectuant un téléchargement des données mises à jour.

De manière avantageuse, l'utilisateur dispose d'informations fiables, disponibles immédiatement sur son téléphone portable.

Selon un mode de réalisation particulier d'un système de communication d'informations selon l'invention, le moyen de formatage formate les informations sélectionnées sous la forme d'un guide interactif. Chaque information sélectionnée téléchargée est associée à un icone. L'activation de l'icone déclenche une application telle qu'une messagerie électronique au moyen de laquelle l'utilisateur peut envoyer un message à une adresse liée à l'information. L'application peut tout aussi bien être une application d'envoi de messages courts ou SMS. Si l'information a pour origine un éditeur de guide touristique, l'adresse est celle de la boîte aux lettres électronique de l'éditeur, ce peut tout aussi bien être celle du site web de l'éditeur. De manière avantageuse, tout éditeur des informations sélectionnées pour un utilisateur peut être informé rapidement par cet utilisateur d'erreur sur ces informations. Une erreur peut tout aussi bien porter sur un horaire modifié, un hôtel fermé, un numéro téléphonique différent. Ainsi, l'éditeur peut rectifier immédiatement sur son site web l'erreur signalée.

Selon un autre mode de réalisation particulier, un service de communication d'informations selon l'invention comprend en outre les étapes qui consistent :
- à transmettre à un instant donné un document multimédia personnalisé du serveur au terminal portable.

Selon ce mode, le serveur est connecté à une plate-forme de transmission de données en mode "push" . Le serveur transmet au terminal portable un document multimédia personnalisé par l'intermédiaire de cette plate-forme. Dans un premier cas, la plate-forme de transmission de données en mode push utilise un protocole de messagerie électronique supporté par le terminal portable. Dans un deuxième cas, la plate-forme utilise un envoi par message SMS ou MMS. Dans un troisième cas, la plate-forme utilise un mode dit "push to talk".

Selon un autre mode de réalisation particulier, un service de communication d'informations selon l'invention comprend en outre les étapes qui consistent :
- à définir par l'utilisateur le contenu d'une session,
- à exécuter de manière différée la session en établissant une connexion différée entre le terminal portable et le serveur via une troisième liaison,
- à transférer des informations entre le terminal portable et la zone de stockage lors du déroulement de la session.

Ce mode permet de minimiser les coûts de communication en différant par exemple la connexion pendant des heures creuses. En outre, le coût peut encore être diminué en utilisant une liaison de type bas débit. Cette minimisation des coûts est particulièrement avantageuse à l'étranger.

Selon un autre mode de réalisation particulier d'un service de communication d'informations selon l'invention, les informations transférées sont des informations sélectionnées au préalable par le moteur de recherche du serveur, mémorisées temporairement dans la zone de stockage et transférées de la zone de stockage vers le terminal portable.

Une fois le transfert effectué, les informations peuvent être effacées de la zone de stockage. Ceci permet d'optimiser l'occupation de l'espace mémoire nécessaire pour la mémorisation.

Selon un autre mode de réalisation particulier d'un service de communication d'informations selon l'invention, les informations transférées sont des informations stockées dans le terminal portable par l'utilisateur et le service comprend en outre l'étape qui consiste :
- à mémoriser dans la zone de stockage les informations transférées depuis le terminal portable.

Ces informations comprennent aussi bien des photographies numériques prises au cours de ses déplacements par l'utilisateur, que des notes saisies par l'utilisateur pour commenter ses photographies ou un agenda. Ce mode permet avantageusement de minimiser l'impact d'un vol de ses effets personnels lors d'un voyage et permet une diffusion rapide des informations à partir de la zone de stockage.

Selon un autre mode de réalisation particulier, un service de communication d'informations selon l'invention comprend en outre, à chaque demande d'accès au service par l'utilisateur à partir de son terminal portable, les étapes qui consistent :
- à afficher une page d'accueil du service comprenant un champ de saisie et des icones déterminés,
- à capturer par le portable des données saisies par l'utilisateur dans le champ de saisie,
- à rechercher par un moteur de recherche du terminal, parmi toutes les informations transférées dans le terminal, celles qui se rapportent aux données saisies par l'utilisateur,
- à afficher sur l'écran du terminal les informations recherchées.

Selon un autre mode de réalisation particulier, un service de communication d'informations selon l'invention comprend en outre, à chaque demande d'accès au service par l'utilisateur à partir de son terminal portable, les étapes qui consistent :
- à afficher une page de notation après activation par l'utilisateur d'un premier icone déterminé,
- à enregistrer dans la page de notation les données saisies par l'utilisateur,
- à établir un lien entre la page de notation et une information déterminée transférée dans le terminal, à la demande de l'utilisateur,
- à transférer lors d'une session ou d'une connexion bas débit la page de notation à une adresse liée à l'information déterminée.

Selon un autre mode de réalisation particulier, un service de communication d'informations selon l'invention comprend en outre, à chaque demande d'accès au service par l'utilisateur à partir de son terminal portable, les étapes qui consistent :
- à afficher un carnet de voyage après activation par l'utilisateur d'un deuxième icone déterminé,
- à saisir par l'utilisateur dans le carnet un agenda composé d'événements mis en relation avec un calendrier,
- à insérer des pages de notation dans le carnet et à les lier à un événement de l'agenda sélectionné par l'utilisateur.

Selon un autre mode de réalisation particulier, un service de communication d'informations selon l'invention comprend en outre, à chaque demande d'accès au service par l'utilisateur à partir de son terminal portable, les étapes qui consistent :
- à mémoriser dans le terminal portable des données multimédia et à les lier à un événement de l'agenda sélectionné par l'utilisateur.

Les données multimédia comprennent des photos numériques, des images, du son ou des textes.

Selon un autre mode de réalisation particulier, un service de communication d'informations selon l'invention comprend en outre, à chaque demande d'accès au service par l'utilisateur à partir de son terminal portable, les étapes qui consistent :
- à vocaliser un menu d'accueil du service,
- à capturer par le terminal portable la réponse de l'utilisateur,
- à rechercher par un moteur de recherche du terminal portable, parmi toutes les informations transférées dans le terminal portable, celles qui se rapportent à la réponse capturée par l'utilisateur,
- à vocaliser par le terminal portable les informations recherchées.

Ce mode a pour avantage de permettre à une personne mal voyante d'accéder aux informations mémorisées dans le terminal portable.

L'invention a en outre pour objet un produit programme d'ordinateur chargeable directement dans la mémoire interne d'un ordinateur numérique ou d'un groupement d'ordinateurs, comprenant des portions de code logiciel pour l'exécution des étapes d'un service selon l'invention, lorsque ledit programme est exécuté sur l'ordinateur ou le groupement d'ordinateurs.

L'invention a en outre pour objet un support utilisable dans un ordinateur ou un groupement d'ordinateurs et sur lequel est enregistré un produit programme d'ordinateur selon l'objet précédent.

D'autres caractéristiques et avantages de l'invention apparaîtront lors de la description qui suit d'exemples particuliers et non limitatifs de réalisation de l'invention ; ces exemples étant décrits en regard des figures annexées suivantes données à titre d'illustration.

La figure 1 est un schéma d'un système de communication d'informations selon l'invention.

La figure 2 est un schéma des différentes étapes d'un service selon l'invention.

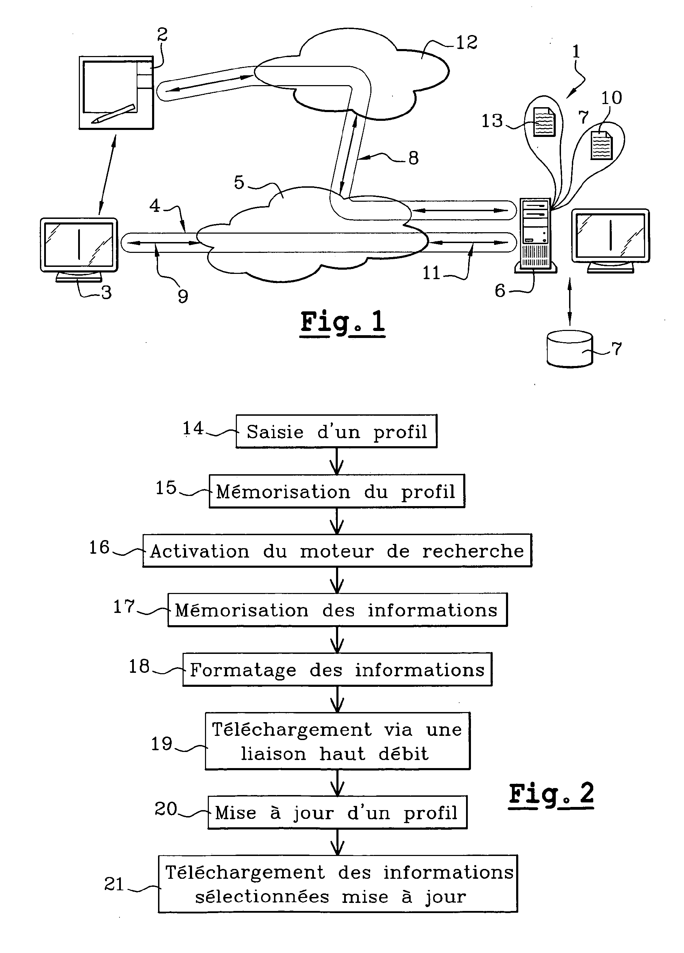

Un système particulier de communication d'informations selon l'invention est décrit en regard de la figure 1. Le système 1 comprend un terminal 2 portable de télécommunication, un point 3 de téléchargement, une liaison 4 haut débit, un réseau 5 de télécommunication, un serveur 6, une zone 7 de stockage, une liaison 8 bas débit.

Le réseau 5 de télécommunication est un réseau informatique, notamment un réseau internet, basé sur la famille de protocoles IP (voir D.Comer, "Internetworking with TCP/IP").

Le serveur 6 est relié au réseau 5 par un premier lien 9. Il est équipé d'un moteur de recherche pour sélectionner en fonction d'un profil des informations. Ces informations sont accessibles à partir du réseau 5 à des adresses quelconques ou à des adresses déterminées pouvant correspondre à celles de serveurs web faisant partie d'une liste pré-établie comprenant en particulier les serveurs web d'éditeurs d'informations touristiques. Cette liste peut comprendre l'adresse de bases de données ciblées sur des sujets donnés tels que des événements sportifs, tel que la météo. Chaque utilisateur du système saisit un ou plusieurs profils, l'ensemble de ces profils forme une liste de profils d'utilisateurs. Le moteur de recherche peut être un moteur de recherche sémantique, un moteur de recherche thématique ou un moteur de recherche par mots clés. Le serveur 6 comprend un moyen 10 de formatage pour formater les informations sélectionnées sous une forme compatible du terminal 2 portable. Ce moyen 10 peut consister à encadrer avec des balises, ou tags en langage anglo-saxon, des informations sélectionnées par le moteur de recherche. L'utilisateur communique préalablement au moyen 10 le type de terminal 2 portable, voire sa référence. A partir de cette information, le moyen 10 détermine les contraintes d'affichage en se référant à la notice technique du constructeur.

La zone 7 de stockage est en liaison avec le serveur 6. Elle mémorise la liste de profils de chaque utilisateur et les informations sélectionnées pour chaque profil. Cette zone 7 est une mémoire du type par exemple mémoire de masse.

Le point 3 de téléchargement est relié au réseau 5 par un deuxième lien 11. Ce point 3 est typiquement un micro-ordinateur situé au domicile de l'utilisateur, à son lieu de travail, dans une agence commerciale ou ce point est une borne équipée d'un micro-ordinateur qui peut être localisée dans tout lieu public.

La liaison 4 haut débit relie le point 3 de téléchargement au serveur 6, via le réseau 5 de télécommunication, elle comprend le premier lien 9 et le deuxième lien 11. Une telle liaison 4 peut être établie par exemple au moyen de paires de cuivre mettant en oeuvre une technique xDSL telle que ADSL, abréviation des termes anglo-saxons Asymetric bit rate Digital Subscriber Loop, ou par exemple au moyen de fibres optiques.

Le terminal 2 portable est un équipement portable de télécommunication dont une liste non-exhaustive est donnée ci-après : ordinateur portable, téléphone mobile WAP (Wireless Application Protocol en langage anglo-saxon) ou UMTS (Universal Mobile Telecommunication System en langage anglo-saxon), smartphone, assistant personnel (ou PDA en langage anglo-saxon), chacun équipé d'un système d'exploitation (ou OS pour Operating System en langage anglo-saxon) tel que Windows CE®, PalmOS, Linux. Le terminal portable est équipé de moyens de connexion au serveur, de moyens de téléchargement et de moyens de mémorisation. Les moyens de connexion consistent essentiellement en un navigateur (ou browser en langage anglo-saxon) tel que Netscape® ou Explorer®. Les moyens de téléchargement permettent de télécharger depuis la zone de stockage, via la liaison haut débit et le premier moyen de téléchargement, les informations sélectionnées pour un profil déterminé d'un utilisateur. Les moyens de téléchargement permettent en outre de télécharger depuis la zone de stockage, via la liaison bas débit, les informations sélectionnées mises à jour. Les moyens de mémorisation permettent de mémoriser les informations téléchargées, il peut s'agir de mémoire du type RAM, EEPROM ou FLASH ou d'une zone mémoire du processeur du terminal. Le terminal portable est relié temporairement au point de téléchargement par l'intermédiaire d'une troisième liaison qui peut être du type Bluetooth® ou d'un type équivalent telle qu'une liaison filaire vers un port USB du point de téléchargement ou vers un port série 802.11, c'est-à-dire une liaison qui a un débit élevé.

La liaison 8 bas débit relie le terminal 2 mobile au serveur 6, via un réseau 12 de téléphonie local relié au réseau 5 de télécommunication. Le réseau 12 de téléphonie locale est par exemple un réseau de téléphonie mobile tel que le réseau téléphonique GSM, GPRS ou tout réseau équivalent.

De manière complémentaire, le système peut comprendre en outre un moyen 13 pour formater les informations sélectionnées sous la forme d'un guide interactif. Ce moyen 13 consiste essentiellement en un logiciel qui associe une adresse réseau à un ensemble d'informations générées par une même entité. Ainsi, lors de la consultation de ces informations, l'utilisateur peut transmettre des commentaires personnels à cette adresse réseau. De tels commentaires peuvent consister à indiquer une modification d'horaires d'ouverture d'un lieu, d'un établissement, à donner une appréciation sur un hôtel, un restaurant.

Un service de communication d'informations selon l'invention se déroule selon plusieurs étapes illustrées par la figure 2. Le service est mis en oeuvre par un système tel que précédemment décrit. Le service permet à un utilisateur d'accéder à partir de son terminal portable à des informations sélectionnées en fonction d'un profil qu'il a préalablement défini.

Pour accéder au service, l'utilisateur doit dans un premier temps établir une connexion initiale avec le serveur. Dans le cas du réseau Internet, le serveur a une adresse IP déterminée à laquelle est associée une URL, abréviation des termes anglo-saxons Uniform Resource Locator. Cette connexion peut être établie à partir de tout équipement du type micro-ordinateur relié au réseau de télécommunication et équipé d'un navigateur (ou browser en langage anglo-saxon) pour afficher la page d'accueil associée à l'URL demandée. L'équipement peut être en particulier le point de téléchargement, le terminal portable ou tout micro-ordinateur relié au réseau. Lors de cette connexion le service comprend les étapes suivantes.

Dans une première étape, le procédé consiste à saisir 14 par l'utilisateur à partir de l'équipement au moins un premier profil. Le profil consiste en un ensemble de données qui peuvent être les suivantes : le type du terminal portable de l'utilisateur voire sa référence, la destination et les dates du voyage, un poids attribué à différents types d'informations pour définir des priorités, des fonctionnalités retenues, un budget pour chaque session et la fréquence des sessions (quotidienne, hebdomadaire). Les différents types d'informations sont par exemple la météo locale, les actualités du pays visité, le taux de change, les résultats d'un club sportif déterminé. Les différentes fonctionnalités qui peuvent être retenues sont par exemple la sauvegarde d'un carnet de route, la diffusion périodique de ce carnet à une liste de diffusion et la sauvegarde des comptes. La saisie consiste par exemple pour l'utilisateur à renseigner des champs d'une page web qui apparaît sur l'écran de l'équipement lors de la connexion au serveur. La page écran peut lui proposer de saisir d'autres profils. Les différents profils constituent une liste de profils de l'utilisateurs.

Dans une deuxième étape, le procédé consiste à mémoriser 15 dans une zone de stockage en liaison avec le serveur chaque profil de l'utilisateur. Cette mémorisation peut être automatique dès saisie par l'utilisateur ou elle peut être déclenchée par le serveur suite à la sélection par l'utilisateur d'un bouton sur la page écran.

Dans une troisième étape, le procédé consiste à déclencher 16 par le serveur l'activation d'un moteur de recherche. Le déclenchement est effectué par le serveur à chaque saisie d'un profil par un utilisateur. Le moteur de recherche sélectionne des informations accessibles à partir du réseau de télécommunication à des adresses déterminées, en fonction du profil. Le déclenchement est effectué en outre par le serveur à chaque modification d'un profil par un utilisateur. Ceci permet la mise à jour des informations sélectionnées en fonction du profil mis à jour.

Dans une quatrième étape, le procédé consiste à mémoriser 17 par le serveur dans la zone de stockage les informations sélectionnées. La mémorisation des informations est effectuée en relation avec un profil déterminé.

L'ensemble des étapes précédentes est effectué par un logiciel implanté sur le serveur et écrit par exemple en langage Javascript®.

Dans une cinquième étape, le procédé consiste à formater 18 les informations sélectionnées sous une forme compatible du terminal portable. Connaissant le type de terminal, le procédé en déduit les contraintes liées à l'écran du terminal en consultant les fiches techniques du constructeur du terminal. Le moyen de formatage encadre avec des balises, ou tags en langage anglo-saxon, les informations sélectionnées par le moteur de recherche pour un profil donné de l'utilisateur.

Dans une sixième étape, le procédé consiste à télécharger 19, dans le terminal portable de l'utilisateur, les informations sélectionnées correspondant à un profil déterminé de l'utilisateur. Le téléchargement est effectué dans le terminal et depuis la zone de stockage, via une liaison haut débit entre le serveur et le premier moyen de téléchargement relié au terminal portable. Cette étape de téléchargement peut être effectuée au moyen d'un logiciel de synchronisation, de type ActiveSync par exemple, entre un micro-ordinateur et le terminal portable, une fois le téléchargement effectué sur le micro-ordinateur via des techniques IP par exemple.

Dans une septième étape, le procédé consiste à mettre 20 à jour par l'utilisateur au moins un de ses profils mémorisés dans la zone de stockage. Cette mise à jour s'effectue lors d'une une connexion établie entre le terminal portable et le serveur via une seconde liaison. L'utilisateur établit cette connexion lors de son voyage en particulier pour modifier son profil et effectuer des mises à jour des informations mémorisées dans le terminal portable. La seconde liaison est typiquement établie au moyen d'un réseau téléphonique local.

Dans une huitième étape, le procédé consiste à télécharger 21 depuis la zone de stockage, dans le terminal portable de l'utilisateur, via la seconde liaison, les informations sélectionnées mises à jour pour un profil déterminé de l'utilisateur.

## Revendications

1. Système (1) de communication d'informations pour des utilisateurs, les informations étant sélectionnées pour chaque utilisateur en fonction d'un profil de l'utilisateur, **caractérisé en ce qu'**il comprend :
- un réseau (5) de télécommunication,
- au moins un serveur (6) accessible via le réseau (5) de télécommunication comprenant un moteur de recherche pour sélectionner, pour un utilisateur déterminé, des informations accessibles à partir du réseau (5) en fonction d'un profil pris parmi une liste de profils de l'utilisateur, le serveur (6) activant ce moteur de recherche à chaque modification d'un profil de l'utilisateur pour mettre à jour les informations sélectionnées,
- une zone (7) de stockage en liaison avec le serveur (6) pour mémoriser la liste de profils de chaque utilisateur et les informations sélectionnées pour chaque profil,
- un moyen (10) de formatage pour formater les informations sélectionnées sous une forme déterminée en liaison avec un profil,
- au moins une première liaison (4) de type haut débit entre un premier moyen (3) de téléchargement et le réseau (5) de télécommunication,
- pour un utilisateur déterminé, au moins un terminal (2) portable de télécommunication comprenant des moyens de connexion au serveur (6), des deuxièmes moyens de téléchargement pour télécharger depuis la zone (7) de stockage via la première liaison (4) et le premier moyen (3) de téléchargement les informations sélectionnées pour un profil déterminé de l'utilisateur, et comprenant des moyens de mémorisation pour mémoriser les informations téléchargées, et des troisièmes moyens de téléchargement pour télécharger depuis la zone (7) de stockage, dans le terminal (2) portable de l'utilisateur, les informations sélectionnées mises à jour pour un profil déterminé de l'utilisateur et pour transférer des informations entre le terminal (2) portable et le serveur (6), via une seconde liaison (8).

2. Système (1) de communication d'informations selon la revendication 1, dans lequel le moyen (10) de formatage formate les informations sélectionnées sous la forme d'un guide interactif.

3. Système (1) de communication d'informations selon l'une des revendications 1 et 2 dans lequel la seconde liaison (8) est de type bas débit.

4. Système (1) de communication d'informations selon la revendication 3 dans lequel la seconde liaison (8) est une liaison GSM.

5. Service de communication d'informations sélectionnées en fonction d'un profil d'un utilisateur, accessible par l'utilisateur à partir d'un terminal (2) portable de télécommunication équipé de moyens de connexion à un serveur (6) par l'intermédiaire d'un réseau (5) de communication, **caractérisé en ce qu'**il comprend, lors d'une connexion initiale avec le serveur (6), des étapes qui consistent :
- à saisir (14) par l'utilisateur à partir d'un moyen (3) de télécommunication relié au réseau (5) au moins un profil,
- à mémoriser (15) dans une zone (7) de stockage en liaison avec le serveur (6) chaque profil saisi par l'utilisateur et à classer les différents profils dans une liste de profils de l'utilisateur,
- à déclencher par le serveur l'activation (16) d'un moteur de recherche, au moins à chaque saisie et à chaque modification d'un profil de l'utilisateur, pour sélectionner des informations accessibles à partir du réseau (5) de télécommunication en fonction de chaque profil et pour mettre à jour les informations sélectionnées,
- à mémoriser (17) les informations sélectionnées dans la zone (7) de stockage, en relation avec chaque profil,
- à formater (18) les informations sélectionnées sous une forme déterminée compatible du terminal (2) portable,
et **en ce qu'**il comprend en outre une étape qui consiste :
- à télécharger (19) depuis la zone (7) de stockage, dans le terminal (2) portable de l'utilisateur, via une première liaison (4) de type haut débit entre le serveur (6) et un premier moyen (3) de téléchargement relié au terminal (2) portable, les informations sélectionnées pour un profil déterminé de l'utilisateur,
et **en ce qu'**il comprend en outre des étapes qui consistent :
- lors d'une connexion entre le terminal (2) portable et le serveur (6), via une seconde liaison (8), à mettre à jour par l'utilisateur au moins un de ses profils mémorisés dans la zone (7) de stockage,
- à télécharger (21) depuis la zone (7) de stockage, dans le terminal (2) portable de l'utilisateur, via la seconde liaison (8), les informations sélectionnées mises à jour pour un profil déterminé de l'utilisateur.

6. Service de communication d'informations selon la revendication 5, dans lequel le formatage consiste en outre à associer aux informations sélectionnées au moins un icone d'activation d'une application déterminée pour saisir au moyen de l'application un commentaire de retour destiné à être transmis à une adresse déterminée du réseau.

7. Service de communication d'informations selon l'une des revendications 5 à 6, comprenant en outre les étapes qui consistent :
- à définir par l'utilisateur le contenu d'une session,
- à exécuter de manière différée la session en établissant une connexion différée entre le terminal (2) portable et le serveur (6) via une troisième liaison,
- à transférer des informations entre le terminal (2) portable et la zone (7) de stockage lors du déroulement de la session.

8. Service de communication d'informations selon la revendication 7, dans lequel les informations transférées sont des informations sélectionnées au préalable par le moteur de recherche du serveur (6), mémorisées temporairement dans la zone (7) de stockage et transférées de la zone (7) de stockage vers le terminal (2) portable.

9. Service de communication d'informations selon la revendication 7, dans lequel les informations transférées sont des informations stockées dans le terminal (2) portable par l'utilisateur et qui comprend en outre l'étape qui consiste :
- à mémoriser dans la zone (7) de stockage les informations transférées depuis le terminal (2) portable.

10. Service de communication d'informations selon l'une des revendications 5 à 9, comprenant en outre les étapes qui consistent, à chaque demande d'accès au service par l'utilisateur à partir de son terminal (2) portable :
- à afficher une page d'accueil du service comprenant un champ de saisie et des icones déterminés,
- à capturer par le terminal (2) portable des données saisies par l'utilisateur dans le champ de saisie,
- à rechercher par un moteur de recherche du terminal (2) portable, parmi toutes les informations transférées dans le terminal (2) portable, celles qui se rapportent aux données saisies par l'utilisateur,
- à afficher sur un écran du terminal (2) portable les informations recherchées.

11. Service de communication d'informations selon la revendication 10, comprenant en outre les étapes qui consistent, à chaque demande d'accès au service par l'utilisateur à partir de son terminal (2) portable :
- à afficher une page de notation après activation par l'utilisateur d'un premier icone déterminé,
- à enregistrer dans la page de notation les données saisies par l'utilisateur,
- à établir un lien entre la page de notation et une information déterminée transférée dans le terminal (2) portable, à la demande de l'utilisateur,
- à transférer lors d'une session ou d'une connexion bas débit la page de notation à une adresse liée à l'information déterminée.

12. Service de communication d'informations selon l'une des revendications 5 à 11, comprenant en outre les étapes qui consistent, à chaque demande d'accès au service par l'utilisateur à partir de son terminal (2) portable :
- à afficher un carnet de voyage après activation par l'utilisateur d'un deuxième icone déterminé,
- à saisir par l'utilisateur dans le carnet un agenda composé d'événements mis en relation avec un calendrier,
- à insérer des pages de notation dans le carnet et à les lier à un événement de l'agenda sélectionné par l'utilisateur.

13. Service de communication d'informations selon l'une des revendications 5 à 12, comprenant en outre les étapes qui consistent, à chaque demande d'accès au service par l'utilisateur à partir de son terminal (2) portable :
- à mémoriser dans le terminal (2) portable des données multimédia et à les lier à un événement de l'agenda sélectionné par l'utilisateur.

14. Service de communication d'informations selon l'une des revendications 5 à 13, comprenant en outre l'étape qui consiste à transmettre à un instant donné un document multimédia personnalisé du serveur au terminal portable.

15. Un produit programme d'ordinateur chargeable directement dans la mémoire interne d'un ordinateur numérique ou d'un groupement d'ordinateurs, comprenant des portions de code logiciel pour l'exécution des étapes du service selon l'une des revendications 5 à 14, lorsque ledit programme est exécuté sur l'ordinateur ou le groupement d'ordinateurs.

16. Support utilisable dans un ordinateur ou un groupement d'ordinateurs et sur lequel est enregistré un produit programme d'ordinateur selon la revendication 15.
